# EUROPEAN PATENT SPECIFICATION

(11) **EP 2 276 157 B1**
(45) Date of publication and mention of the grant of the patent: **07.01.2015**
(21) Application number: 10167277.2
(22) Date of filing: 25.06.2010
(51) Int. Cl.: H02M 3/158, H02M 1/42

(54) **Power converter, device and method for interleaving controlling power factor correction circuits**
Stromwandler, Vorrichtung und Verfahren zum Verschachteln von Leistungsfaktorkompensationsschaltungen
Convertisseur de puissance, dispositif et procédé d'entrelacement de circuits de correction du facteur de puissance

(30) Priority: 17.07.2009 CN 200910159150
(43) Date of publication of application: 19.01.2011
(73) Proprietor: Huawei Technologies Co., Ltd., Longgang District, Shenzhen Guangdong 518129 (CN)
(72) Inventor: Huang, Boning, Shenzhen Guangdong 518129 (CN)
(74) Representative: Isarpatent

(56) References cited:
- JP-A- 2008 125 313
- US-A- 5 907 223
- US-A- 5 936 855
- US-A- 6 026 006

## Description

### Field of the Invention

The present invention relates to circuit technologies, and in particular, to a Power Converter, a device, and a method for interleaving controlling Power Factor Correction (PFC) circuits.

### Background of the Invention

At present, a global trend is energy saving and emission reduction, and the energy conversion efficiency in the telecommunications field is an important aspect. High efficiencies of power supplies depend on the enhancement of the power components and application of power topologies.

A Power Converter in the prior art uses a bridgeless PFC circuit, which includes: an inductor L1, an inductor L2, a switch S1, a switch S2, a diode D1, a diode D2, a diode D3, a diode D4, a diode D5, and a diode D6.

The inductor L1 and inductor L2 are boost circuit inductors. The switch S1 and the switch S2 are PFC primary switches. The diodes D1 and D2 are boost power rectifier diodes. The diodes D3 and D4 are fly-wheel diodes. The diodes D5 and D6 do not participate in normal work, but work in surge protection. The diodes used by the Power Converter are carborudum diodes, and the switches are carborundum switches.

The working principles of the Power Converter are as follows:
In the positive half cycle, the PFC primary switch S1 is turned on, and the power supply charges the boost circuit inductor L1 through the PFC primary switch S1 and the fly-wheel diode D4 to store energy. When the current reaches the set value, S 1 is turned off. The boost circuit inductor L1 is opposite to the flow direction of the power supply, and is series-connected to the power supply. The boost power rectifier diode D1 and the fly-wheel diode D4 charge the energy storage capacitor, and transmit energy for secondary conversion power supplies. When the current of the power inductor decreases to a set value, the PFC primary switch S 1 is turned on again, charges the boost circuit inductor again to store energy, and so on. In the positive half cycle, the PFC primary switch S2, the boost power rectifier diode D2, the fly-wheel diode D3, and the boost circuit inductor L2 do not participate in work.

In the negative half cycle, the PFC primary switch S2 works symmetrically to the PFC primary switch S1; the fly-wheel diode D3 works symmetrically to the fly-wheel diode D4; the boost circuit inductor L1 works symmetrically to the boost circuit inductor L2; and the working principles are the same as those in the positive half cycle. In the negative half cycle, the PFC primary switch S1, the boost power rectifier diode D1, the fly-wheel diode D4, and the boost circuit inductor L1 do not participate in work.

During implementing of the present invention, the inventor finds at least the following defects in the prior art:
The positive half cycle and the negative half cycle of the Power Converter are implemented through different boost circuits, and the utilization of the inductor is low, thus leading to low utilization of the power components.

JP 2008125313 A discloses a switching power supply. To reduce the size and the cost of an input filter in a high power factor switching power supply (PFC), and to reduce a loss of the power supply caused by a semiconductor; the switching power supply achieves high efficiency by employing a two-transistor critical mode PFC interleave system in place of a single transistor critical mode PFC interleave system thereby reducing a loss of a VF by a diode bridge.

US 5907223 A discloses an AC-AC ballast system for a discharge lamp (e.g., a fluorescent lamp), which includes a PFC converter which incorporates an isolation transformer, and a DC-AC inverter provided on the secondary side of the isolation transformer. Because the AC line input is isolated from the lamp load by the transformer in the PFC converter, the switching frequency of the PFC converter can be advantageously significantly higher than the lamp current frequency (and the switching frequency of the DC-AC inverter), to thereby enable a significant reduction in the size and weight of the ballast system, without an increase in the emission of EMI radiation from the lamp. In this regard, the ballast system of the present invention can be thought of as a two-frequency ballast system having an isolated PFC converter.

### Summary of the Invention

The embodiments of present invention provide a Power Converter, a device, and a method for interleaving controlling PFC circuits to improve the utilization of the inductor.

A Power Converter provided in an embodiment of the present invention includes: a first bridge arm unit, a second bridge arm unit, a third bridge arm unit and a capacitor.

The upper side of the first bridge arm unit and the upper side of the second bridge arm unit are connected with the first end of the capacitor, and the lower side of the first bridge arm unit and the lower side of the second bridge arm unit are connected with the second end of the capacitor.

The first bridge arm unit includes two diodes or switches series-connected in the same direction, and the joint of the two diodes or switches is connected with the first end of the power supply.

The second bridge arm unit includes two switches and one inductor; the two switches included in the second bridge arm unit are series-connected in the same direction, and the first end of the inductor is connected with the joint of the two switches in the second bridge arm unit, and the second end of the inductor is connected with the second end of the power supply.

The upper side of the third bridge arm unit is connected with the first end of the capacitor, and the lower side of the third bridge arm unit is connected with the second end of the capacitor.

The third bridge arm unit comprises two diodes series-connected in a same direction, and a joint of the two diodes in the third bridge arm unit is connected with the second end of the power supply.

A rectifier provided in an embodiment of the present invention includes the Power Converter provided herein.

A power system provided in an embodiment of the present invention includes the Power Converter provided herein.

A method for interleaving controlling PFC circuits in an embodiment of the present invention is applied to the Power Converter provided herein. The Power Converter includes at least two second bridge arm units, where: interleaving turning on the switches in the at least two second bridge arm units so that the at least two second bridge arm units work in an interleaving paralleled way at any phase difference.

As seen from the foregoing technical solution, when the Power Converter works, the inductor is always in the working state; therefore, the inductor is fully utilized, and the utilization of the inductor is improved.

### Brief Description of the Drawings

To illustrate the technical solution according to the embodiments of the present invention more clearly, the accompanying drawings for describing the embodiments are introduced briefly below. Apparently, the accompanying drawings in the following description are only some embodiments of the present invention, and persons of ordinary skill in the art can derive other drawings from the accompanying drawings without creative efforts.
FIG. 1 shows a structure of a Power Converter according to an example;
FIG. 2 shows a structure of a Power Converter according to a first embodiment of the present invention;
FIG. 3 shows a structure of a Power Converter according to a second embodiment of the present invention;
FIG. 4 shows a structure of a Power Converter according to a third embodiment of the present invention;
FIG. 5 shows a structure of a rectifier according to an embodiment of the present invention;
FIG. 6 shows a structure of a power system according to a first embodiment of the present invention; and
FIG. 7 shows a structure of a power system according to a second embodiment of the present invention.

### Detailed Description of the Embodiments

The following detailed description is directed to the technical solution of the present invention with reference to the accompanying drawings. However, the embodiments to be described are only a part of, rather than all of, the embodiments of the present invention. Additionally, all other embodiments, which can be derived by those skilled in the art from the embodiments given herein without any creative efforts, fall within the scope of the present invention.

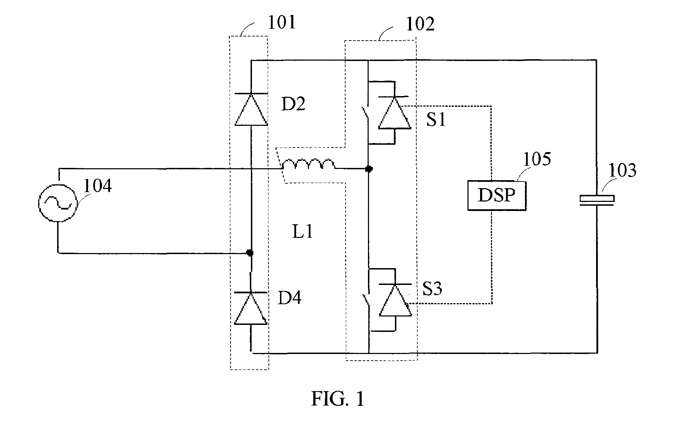

The Power Converter is introduced first below. FIG. 1 shows a structure of a Power Converter according to an example. The Power Converter includes a first bridge arm unit 101, a second bridge arm unit 102, and a capacitor 103.

The upper side of the first bridge arm unit 101 and the upper side of the second bridge arm unit 102 are connected with the first end of the capacitor 103, and the lower side of the first bridge arm unit 101 and the lower side of the second bridge arm unit 102 are connected with the second end of the capacitor 103.

The first bridge arm unit 101 includes diodes D2 and D4 series-connected in the same direction, and the joint of D2 and D4 is connected with the first end of the power supply 104.

In an embodiment of the present invention, the diodes D2 and D4 in the first bridge arm unit 101 may be replaced with two switches. In this embodiment, the two switches in the first bridge arm unit 101 are also series-connected in the same direction, and the joint of the two switches is also connected with the first end of the power supply 104.

The second bridge arm unit 102 includes switches S1 and S3, and an inductor L1; the switches S1 and S3 are series-connected in the same direction, and the first end of the inductor L1 is connected with the joint of the switches S1 and S3, while the second end of the inductor L1 is connected with the second end of the power supply 104. The switches S1 and S3 may be Metal Oxide Semiconductor Field Effect Transistors (MOSFET) or Insulated Gate Bipolar Transistors (IGBTs).

There may be more than one second bridge arm unit. In the case that the Power Converter includes at least two second bridge arm units, the at least two second bridge arm units are parallel-connected in the same direction.

Evidently, when the Power Converter according to the example works, the inductor needs to stay in the working state all along; therefore, the inductor is fully utilized, and the utilization of the inductor is improved.

As shown in FIG. 1, the Power Converter may further include a Digital Signal Processor (DSP) 105, which is configured to control the work of the switches S1 and S3 in the second bridge arm unit 102.

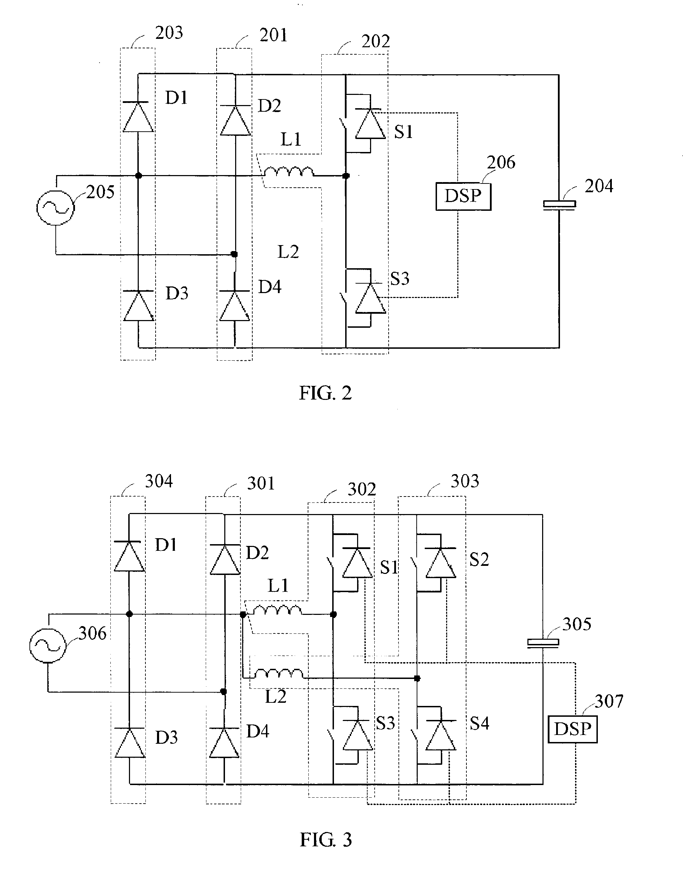

FIG. 2 shows a structure of a Power Converter according to a first embodiment of the present invention. The Power Converter includes a first bridge arm unit 201, a second bridge arm unit 202, a third bridge arm unit 203, and a capacitor 204.

The upper side of the first bridge arm unit 201, the upper side of the second bridge arm unit 202, and the upper side of the third bridge arm unit 203 are connected with the first end of the capacitor 204. The lower side of the first bridge arm unit 201, the lower side of the second bridge arm unit 202, and the lower side of the third bridge arm unit 203 are connected with the second end of the capacitor 204.

The first bridge arm unit 201 includes diodes D2 and D4 series-connected in the same direction, and the joint of D2 and D4 is connected with the first end of the power supply 205.

In an embodiment of the present invention, the diodes D2 and D4 in the first bridge arm unit 201 may be replaced with two switches. In this embodiment, the two switches in the first bridge arm unit 201 are also series-connected in the same direction, and the joint of the two switches is also connected with the first end of the power supply 205.

The second bridge arm unit 202 includes switches S1 and S3, and an inductor L1; the switches S1 and S3 are series-connected in the same direction, and the first end of the inductor L1 is connected with the joint of the switches S 1 and S3, while the second end of the inductor L1 is connected with the second end of the power supply 205. The switches S1 and S3 may be MOSFET switches or IGBT switches.

There may be more than one second bridge arm unit. In the case that the Power Converter includes at least two second bridge arm units, the at least two second bridge arm units are parallel-connected in the same direction.

The third bridge arm unit 203 includes diodes D1 and D3 series-connected in the same direction, and the joint of D1 and D3 is connected with the second end of the power supply 205.

Evidently, when the Power Converter in this embodiment works, the inductor stays in the working state all along, so that the inductor is fully utilized, and that the utilization of the inductor is improved; moreover, the third bridge arm unit includes two diodes so that the primary circuit has diode clamps to resist Electro Magnetic Interference (EMI) and lightning surges when the Power Converter works in a positive half cycle or a negative half cycle.

As shown in FIG. 2, the Power Converter according to a first embodiment of the present invention may further include a DSP 206, which is configured to control the work of the switches S1 and S3 in the second bridge arm unit 202.

In the Power Converter provided in this embodiment, the diodes may be MOSFET diodes or IGBT diodes, and the switches may be MOSFET switches or IGBT switches. In the case of MOSFET diodes or MOSFET switches, the turn-on voltage drop of the MOSFET diodes and MOSFET switches is far less than that of the carborundum diodes. Therefore, the circuit loss is reduced, and the conversion efficiency is higher. Meanwhile, the MOSFET diodes and the MOSFET switches reduce the circuit cost.

A method for interleaving controlling PFC circuits according to an embodiment of the present invention is applied to the Power Converter provided herein. The Power Converter includes at least two second bridge arm units. The method includes: the switches in at least two second bridge arm units are interleaving turned on so that the at least two second bridge arm units work in an interleaving paralleled way at any phase difference.

The switches in at least two bridge arm units can be interleaving turned on, depending on whether the Power Converter works in the positive half cycle or the negative half cycle, or according to the duty ratio.

The second bridge arm unit includes two switches. When one of the switches is turned on as a primary switch, the other switch may be used as an inductor current fly-wheel switch. Therefore, the switch that serves as an inductor current fly-wheel switch can implement synchronous rectification.

Evidently, through the method for interleaving controlling PFC circuits, the at least two second bridge arm units in the Power Converter can work in an interleaving paralleled way at any phase difference. Therefore, the inductors in the at least two second bridge arm units can work in parallel, and the inductors stay in the working state all along, so that the inductors are fully utilized, and that the utilization of the inductors is improved.

The method for interleaving controlling PFC circuits provided herein is introduced below in light of the embodiments of the Power Converter. FIG. 3 shows a structure of a Power Converter in the second embodiment of the present invention. The Power Converter includes a first bridge arm unit 301, a second bridge arm unit 302, a second bridge arm unit 303, a third bridge arm unit 304 and a capacitor 305.

The upper side of the first bridge arm unit 301, the upper side of the second bridge arm unit 302, the upper side of the second bridge arm unit 303, and the upper side of the third bridge arm unit 304 are connected with the first end of the capacitor 305. The lower side of the first bridge arm unit 301, the lower side of the second bridge arm unit 302, the lower side of the second bridge arm unit 303, and the lower side of the third bridge arm unit 304 are connected with the second end of the capacitor 305.

The first bridge arm unit 301 includes diodes D2 and D4 series-connected in the same direction, and the joint of D2 and D4 is connected with the first end of the power supply 306.

In an embodiment of the present invention, the diodes D2 and D4 in the first bridge arm unit 301 may be replaced with two switches. In this embodiment, the two switches in the first bridge arm unit 301 are also series-connected in the same direction, and the joint of the two switches is also connected with the first end of the power supply 306.

The second bridge arm unit 302 includes switches S1 and S3, and an inductor L1; the switches S1 and S3 are series-connected in the same direction, and the first end of the inductor L1 is connected with the joint of the switches S 1 and S3, while the second end of the inductor L1 is connected with the second end of the power supply 306. The switches S1 and S3 may be MOSFET switches or IGBT switches.

The second bridge arm unit 303 includes switches S2 and S4, and an inductor L2; the switches S2 and S4 are series-connected in the same direction, and the first end of the inductor L2 is connected with the joint of the switches S2 and S4, while the second end of the inductor L2 is connected with the second end of the power supply 306. The switches S2 and S4 may be MOSFET switches or IGBT switches.

The second end of the inductor L1 and the second end of the inductor L2 are connected with the second end of the power supply 306. That is, the second end of the inductor L1 and the second end of the inductor L2 are connected together in an interleaved way.

The third bridge arm unit 304 includes diodes D1 and D3 series-connected in the same direction, and the joint of D1 and D3 is connected with the second end of the power supply 306.

The working process of the second embodiment of the Power Converter includes two scenarios: the Power Converter works in the positive half cycle, or the Power Converter works in the negative half cycle. When the Power Converter works in the positive half cycle, two modes exist, depending on whether the duty ratio is greater than 50% or less than 50%. Likewise, when the Power Converter works in the negative half cycle, two modes exist, depending on whether the duty ratio is greater than 50% or less than 50%.
(A) When the Power Converter works in the positive half cycle, the switches S3 and S4 are primary switches, and, in the case that the duty ratio is less than 50%, the working process is as follows:
   Step A1: The switch S3 is closed; the current of the inductor L1 (I_{L1}) rises; the switch S2 and the body diode perform fly wheeling for I_{L2}; and the current of L2 (I_{L2}) falls. At time t1, I_{L1} reaches the set value, and the switch S3 is turned off.
   Step A2: The switches S3 and S4 are turned off; the L1 current (I_{L1}) and the L2 current (I_{L2}) fall; the switch S2 and the body diode perform fly wheeling for I_{L2}; and the switch S1 and the body diode perform fly wheeling for I_{L1}. At time t2, I_{L2} reaches zero, and the switch S4 is turned on.
   Step A3: The switch S3 is turned off, and the switch S4 is turned on. The L1 current (I_{L1}) falls, and the switch S1 and the body diode perform fly wheeling for I_{L1}. Because the switch S4 is turned on, the L2 current (I_{L2}) rises; at time t3, I_{L2} reaches the set value, and the switch S4 is turned off.
   Step A4: The switches S3 and S4 are turned off; the L1 current (I_{L1}) and the L2 current (I_{L2}) fall; the switch S2 and the body diode perform fly wheeling for I_{L2}; and the switch S1 and the body diode perform fly wheeling for I_{L1}. At time t4, I_{L1} reaches zero, and the switch S3 is turned on.
   Repeat steps A1-A4.
(B) When the Power Converter works in the positive half cycle, the switches S3 and S4 are primary switches, and, in the case that the duty ratio is greater than 50%, the working process is as follows:
   . Step B1: The switch S3 is closed; the current of the inductor L1 (I_{L1}) rises; the switch S2 and the body diode perform fly wheeling for I_{L2}; and the current of L2 (I_{L2}) falls. At time t1, I_{L2} falls to zero, and the switch S4 is turned on.
   Step B2: The switches S3 and S4 are turned on; the L1 current (I_{L1}) and the L2 current (I_{L2}) rise; at time t2, I_{L1} reaches the set value, and the switch S3 is turned off.
   Step B3: The switch S3 is turned off, and the switch S4 is turned on. The L1 current (I_{L1}) falls, and the switch S1 and the body diode perform fly wheeling for I_{L1}. Because the switch S4 is turned on, the L2 current (I_{L2}) rises; at time t3, I_{L1} falls to zero, and the switch S3 is turned on.
   Step B4: The switches S3 and S4 are turned on; the L1 current (I_{L1}) and the L2 current (I_{L2}) rise; at time t4, I_{L2} reaches the set value, and the switch S4 is turned off.
   Repeat steps B1-B4.
(C) When the Power Converter works in the negative half cycle, the switches S 1 and S2 are primary switches, and, in the case that the duty ratio is less than 50%, the working process is similar to that when the Power Converter works in the positive half cycle and the duty ratio is less than 50%.
(D) When the Power Converter works in the negative half cycle, the switches S1 and S2 are primary switches, and, in the case that the duty ratio is greater than 50%, the working process is similar to that when the Power Converter works in the positive half cycle and the duty ratio is greater than 50%.

Evidently, the two second bridge arm units in the Power Converter in this embodiment can work in an interleaving paralleled way. Therefore, the inductors in the two second bridge arm units can work in an interleaving paralleled way, and the inductors stay in the working state all along, so that the inductors are fully utilized, and that the utilization of the inductors is improved. Moreover, two diodes are included in the third bridge arm unit, and therefore, the primary circuit has diode clamps to resist EMI and lightning surges when the Power Converter works in a positive half cycle or a negative half cycle.

The Power Converter provided in this embodiment may work in fixed switching frequency DCM, or work in fixed frequency CCM, or work in variable frequency BCM.

The sequence of the steps in the method provided in this embodiment is adjustable as required.

As shown in FIG. 3, the Power Converter according to a second embodiment of the present invention may further include a DSP 307, which is configured to control the work of the switches S1 and S3 in the second bridge arm unit 302 and control the work of the switches S2 and S4 in the second bridge arm unit 303.

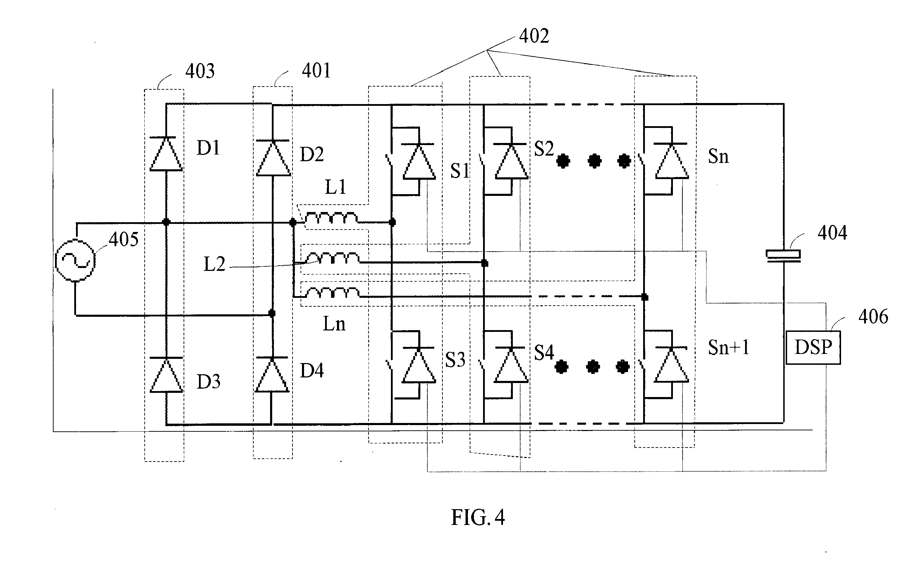

It is understandable that the Power Converter provided in this embodiment may have three or more second bridge arm units. FIG. 4 shows a structure of a Power Converter according to a third embodiment of the present invention. The Power Converter includes a first bridge arm unit 401, a second bridge arm unit group 402, a third bridge arm unit 403, and a capacitor 404.

The second bridge arm unit group 402 includes n second bridge arm units connected in parallel.

The upper side of the first bridge arm unit 401, the upper sides of the n second bridge arm units, and the upper side of the third bridge arm unit 403 are connected with the first end of the capacitor 404. The lower side of the first bridge arm unit 301, the lower sides of the n second bridge arm units, and the lower side of the third bridge arm unit 403 are connected with the second end of the capacitor 404.

The first bridge arm unit 301 includes diodes D2 and D4 series-connected in the same direction, and the joint of D2 and D4 is connected with the first end of the power supply 405.

In an embodiment of the present invention, the diodes D2 and D4 in the first bridge arm unit 401 may be replaced with two switches. In this embodiment, the two switches in the first bridge arm unit 401 are also series-connected in the same direction, and the joint of the two switches is connected with the first end of the power supply 405.

The 1^{st} second bridge arm unit in the second bridge arm unit group includes switches S1 and S3, and an inductor L1; the switches S1 and S3 are series-connected in the same direction, and the first end of the inductor L1 is connected with the joint of the switches S1 and S3, while the second end of the inductor L1 is connected with the second end of the power supply 405. The switches S1 and S3 may be MOSFET switches or IGBT switches.

The 2^{nd} second bridge arm unit in the second bridge arm unit group includes switches S2 and S4, and an inductor L2; the switches S2 and S4 are series-connected in the same direction, and the first end of the inductor L2 is connected with the joint of the switches S2 and S4, while the second end of the inductor L2 is connected with the second end of the power supply 405. The switches S2 and S4 may be MOSFET switches or IGBT switches.

The n^{th} second bridge arm unit in the second bridge arm unit group includes switches Sn and Sn+1, and an inductor Ln; the switches Sn and Sn+1 are series-connected in the same direction, and the first end of the inductor Ln is connected with the joint of the switches Sn and Sn+1, while the second end of the inductor Ln is connected with the second end of the power supply 405. The switches Sn and Sn+1 may be MOSFET switches or IGBT switches.

The second ends of the inductors L1, L2, ..., Ln are connected with the second end of the power supply 405. That is, the second ends of the inductor L1, L2, ..., Ln are connected together in an interleaved way.

The third bridge arm unit 403 includes diodes D1 and D3 series-connected in the same direction, and the joint of D1 and D3 is connected with the second end of the power supply 405.

Evidently, the n second bridge arm units in the Power Converter in this embodiment can work in an interleaving paralleled way. Therefore, the inductors in the n second bridge arm units can work in an interleaving paralleled way, and the inductors stay in the working state all along, so that the inductors are fully utilized, and that the utilization of the inductors is improved. Moreover, two diodes are included in the third bridge arm unit, and therefore, the primary circuit has diode clamps to resist EMI and lightning surges when the Power Converter works in a positive half cycle or a negative half cycle.

The working process described above is intended for the scenario where the Power Converter has two second bridge arm units. In the case that the Power Converter has three or more second bridge units, the working process is similar. If the Power Converter has more second bridge arm units, the inductor current output to the secondary circuit is more continuous, and the ripples are fewer, and greater power of the power supply is convertible.

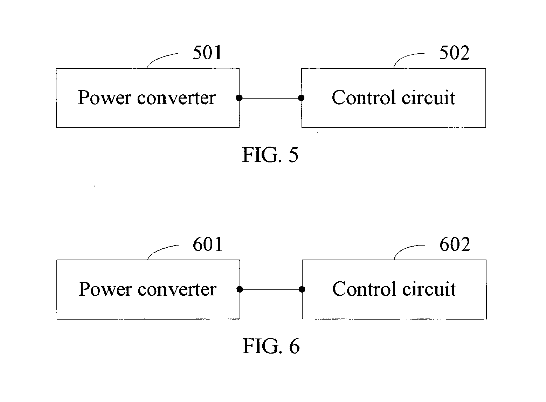

The embodiments of the present invention provide a device for using the Power Converter provided herein. The device may be a rectifier. FIG. 5 shows a structure of a rectifier according to an embodiment of the present invention. The rectifier includes: a Power Converter 501 provided herein and a control circuit 502. The control circuit 502 is configured to control the work of the Power Converter 501.

Further, the embodiments of the present invention further provide a power system which includes the Power Converter provided herein. The power system is configured to convert Alternate Current (AC) to Direct Current (DC). FIG. 6 shows a structure of a power system according to a first embodiment of the present invention. The power system includes: a Power Converter 601 provided herein and a control circuit 602. The control circuit 602 is configured to control the work of the Power Converter 601.

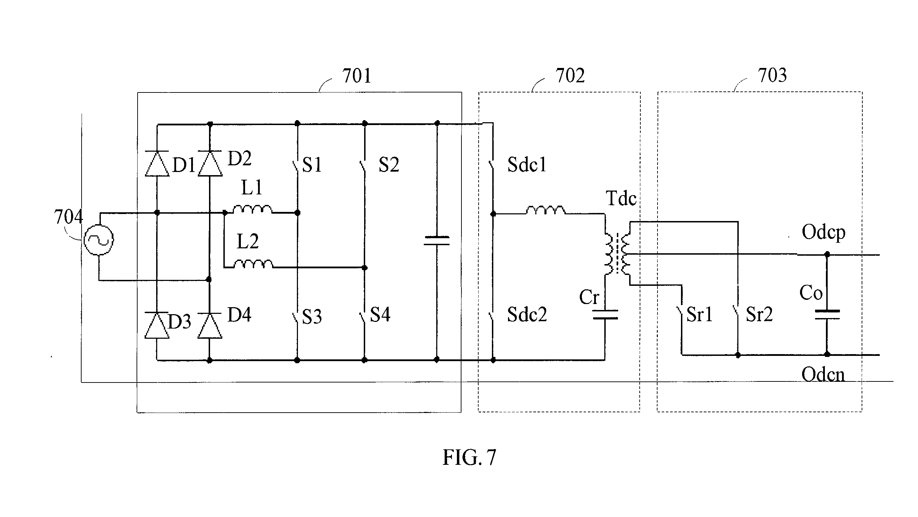

FIG. 7 shows a structure of a power system according to a second embodiment of the present invention. The power system includes: a Power Converter 701 provided herein, a resonant Logical Link Control (LLC) circuit 702, and a synchronous rectifier circuit 703.

The Power Converter 701 includes a first bridge arm unit, two second bridge arm units connected in parallel, a third bridge arm unit, and a capacitor.

The upper side of the first bridge arm unit, the upper side of the second bridge arm unit, and the upper side of the third bridge arm unit are connected with the first end of the capacitor. The lower side of the first bridge arm unit, the lower side of the second bridge arm unit, and the lower side of the third bridge arm unit are connected with the second end of the capacitor.

The first bridge arm unit includes diodes D2 and D4 series-connected in the same direction, and the joint of D2 and D4 is connected with the first end of the power supply 704.

In an embodiment of the present invention, the diodes D2 and D4 in the first bridge arm unit may be replaced with two switches. In this embodiment, the two switches in the first bridge arm unit are also series-connected in the same direction, and the joint of the two switches is also connected with the first end of the power supply 704.

The 1^{st} second bridge arm unit includes switches S1 and S3, and an inductor L1; the switches S1 and S3 are series-connected in the same direction, and the first end of the inductor L1 is connected with the joint of the switches S1 and S3, while the second end of the inductor L1 is connected with the second end of the power supply 704. The switches S1 and S3 may be MOSFET switches or IGBT switches.

The 2^{nd} second bridge arm unit includes switches S2 and S4, and an inductor L2; the switches S2 and S4 are series-connected in the same direction, and the first end of the inductor L2 is connected with the joint of the switches S2 and S4, while the second end of the inductor L2 is connected with the second end of the power supply 704. The switches S2 and S4 may be MOSFET switches or IGBT switches.

The second end of the inductor L1 and the second end of the inductor L2 are connected with the second end of the power supply 704. That is, the second end of the inductor L1 and the second end of the inductor L2 are connected together in an interleaved way.

The third bridge arm unit includes diodes D1 and D3 series-connected in the same direction, and the joint of D1 and D3 is connected with the second end of the power supply 404.

The first dc-dc switch (Sdc1) included in the LLC circuit 702 is connected with the first end of the capacitor in the Power Converter 701, and the second dc-dc switch (Sdc2) is connected with the second end of the capacitor in the Power Converter 701, while the first dc-dc switch (Sdc1) is series-connected to the second dc-dc switch (Sdc2). The first end of the dc-dc inductor (Lr) is connected with the joint of the first dc-dc switch (Sdc1) and the second dc-dc switch (Sdc2); the second end of the dc-dc inductor (Lr) is connected with the first input end of the transformer (Tdc); the first end of the dc-dc capacitor (Cr) is connected with the second end of the capacitor in the Power Converter 701; and the second end of the dc-dc capacitor (Cr) is connected with the second input end of the transformer (Tdc).

The first synchronous rectifier switch (Sr1) in the synchronous rectifier circuit 703 is connected with the first output end and the output negative end (Odcn) of the transformer (Tdc) in the LLC circuit 702; the second synchronous rectifier switch (Sr2) is connected with the second output end and the output negative end (Odcn) of the transformer (Tdc) in the LLC circuit 702; the third output end of the transformer (Tdc) in the LLC circuit 702 is connected with the output positive end (Odcp); and the output filter capacitor (Co) is connected with the output positive end (Odcp) and the output negative end (Odcn).

Evidently, the two second bridge arm units in the Power Converter in this embodiment can work in an interleaving paralleled way. Therefore, the inductors in the two second bridge arm units can work in an interleaving paralleled way, and the inductors stay in the working state all along, so that the inductors are fully utilized, and that the utilization of the inductors is improved. Moreover, two diodes are included in the third bridge arm unit, and therefore, the primary circuit has diode clamps to resist EMI and lightning surges when the Power Converter works in a positive half cycle or a negative half cycle.

The word "joint" herein refers to part or all of the media that connect at least two components.

Persons of ordinary skill in the art should understand that all or a part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a magnetic disk, a Compact Disk Read-Only Memory (CD-ROM), a Read-Only Memory (ROM) or a Random Access Memory (RAM).

## Claims

1. A Power Converter, comprising a first bridge arm unit (201), a second bridge arm unit (202), a third bridge arm unit (203) and a capacitor (204), wherein:
an upper side of the first bridge arm unit (201) and an upper side of the second bridge arm unit (202) are connected with a first end of the capacitor (204), and a lower side of the first bridge arm unit (201) and a lower side of the second bridge arm unit (202) are connected with a second end of the capacitor (204);
the first bridge arm unit (201) comprises two diodes (D2, D4) or switches series-connected in a same direction, and a joint of the two diodes (D2, D4) or switches is connected with a first end of a power supply (205);
the second bridge arm unit (202) comprises two switches (S1, S3) and one inductor (L1); the two switches (S1, S3) in the second bridge arm unit (202) are series-connected in a same direction, and a first end of the inductor (L1) is connected with a joint of the two switches (S1, S3) in the second bridge arm unit (202), and a second end of the inductor (L1) is connected with a second end of the power supply (205);
**characterized in that** an upper side of the third bridge arm unit (203) is connected with the first end of the capacitor (204), and a lower side of the third bridge arm unit (203) is connected with the second end of the capacitor (204); and
the third bridge arm unit (203) comprises two diodes (D1, D3) series-connected in a same direction, and a joint of the two diodes (D1, D3) in the third bridge arm unit (203) is connected with the second end of the power supply (205).

2. The Power Converter of claim 1, wherein: the Power Converter comprises: at least two second bridge arm units (302, 303), and the at least two second bridge arm units (302, 303) are parallel-connected.

3. The Power Converter of claim 1, wherein: the switches (S1, S3) in the second bridge arm unit (302) are Metal Oxide Semiconductor Field Effect Transistors, MOSFETs or Insulated Gate Bipolar Transistor, IGBTs.

4. A rectifier, comprising the Power Converter (501) according to any of claims 1-3, and a control circuit (502), wherein the control circuit (502) is configured to control the work of the Power Converter (501).

5. A power system, comprising the Power Converter (601) according to any of claims 1-3 and a control circuit (602), wherein the control circuit (602) is configured to control the work of the Power Converter (601).

6. A method for interleaving controlling Power Factor Correction, PFC circuits, applied to the Power Converter according to any one of claims 1-3, wherein: the Power Converter comprises at least two second bridge arm units, and the method comprises:
interleaving turning on switches in the at least two second bridge arm units, so that the at least two second bridge arm units work in an interleaving paralleled way at any phase difference.

7. The method of claim 6, wherein the process of interleaving turning on the switches in the at least two second bridge arm units comprises:
interleaving turning on the switches in the at least two second bridge arm units, depending on whether the Power converter works in a positive half cycle or a negative half cycle, or according to a duty ratio.

8. The method of claim 6 or 7, wherein:
when one switch in the second bridge arm unit is turned on, the other switch in the second bridge arm unit serves as an inductor current fly-wheel switch.

9. The method of claim 6 or 7, wherein:
the Power Converter works in a fixed switching frequency Discontinuous Current Mode, DCM, or works in a fixed frequency Continuous Current Mode, CCM, or works in a variable frequency Boundary Continuous Mode, BCM.

10. A computer program product, **characterized by** comprising computer program code, which, when executed by a computer unit, will cause the computer unit to perform the method according to any one of claims 6 to 9.

## Patentansprüche

1. Leistungswandler, umfassend eine erste Brückenzweigeinheit (201), eine zweite Brückenzweigeinheit (202), eine dritte Brückenzweigeinheit (203) und einen Kondensator (204), wobei:
eine obere Seite der ersten Brückenzweigeinheit (201) und eine obere Seite der zweiten Brückenzweigeinheit (202) mit einem ersten Ende des Kondensators (204) verbunden sind und eine untere Seite der ersten Brückenzweigeinheit (201) und eine untere Seite der zweiten Brückenzweigeinheit (202) mit einem zweiten Ende des Kondensators (204) verbunden sind;
die erste Brückenzweigeinheit (201) zwei Dioden (D2, D4) oder Schalter umfasst, die in einer gleichen Richtung in Reihe geschaltet sind, und eine Verbindungsstelle der zwei Dioden (D2, D4) oder Schalter mit einem ersten Ende einer Stromversorgung (205) verbunden ist;
die zweite Brückenzweigeinheit (202) zwei Schalter (S1, S3) und eine Spule (L1) umfasst; die zwei Schalter (S1, S3) in der zweiten Brückenzweigeinheit (202) in einer gleichen Richtung in Reihe geschaltet sind und ein erstes Ende der Spule (L1) mit einer Verbindungsstelle der zwei Schalter (S1, S3) in der zweiten Brückenzweigeinheit (202) verbunden ist und ein zweites Ende der Spule (L1) mit einem zweiten Ende der Stromversorgung (205) verbunden ist;
**dadurch gekennzeichnet, dass** eine obere Seite der dritten Brückenzweigeinheit (203) mit dem ersten Ende des Kondensators (204) verbunden ist und eine untere Seite der dritten Brückenzweigeinheit (203) mit dem zweiten Ende des Kondensators (204) verbunden ist; und
die dritte Brückenzweigeinheit (203) zwei Dioden (D1, D3) umfasst, die in einer gleichen Richtung in Reihe geschaltet sind, und eine Verbindungsstelle der zwei Dioden (D1, D3) in der dritten Brückenzweigeinheit (203) mit dem zweiten Ende der Stromversorgung (205) verbunden ist.

2. Leistungswandler nach Anspruch 1, wobei der Leistungswandler mindestens zwei zweite Brückenzweigeinheiten (302, 303) umfasst und die mindestens zwei zweiten Brückenzweigeinheiten (302, 303) parallelgeschaltet sind.

3. Leistungswandler nach Anspruch 1, wobei die Schalter (S1, S3) in der zweiten Brückenzweigeinheit (302) Metalloxidhalbleiter-Feldeffekttransistoren (Metal Oxide Semiconductor Field Effect Transistors, MOSFETs) oder "Insulated-Gate"-Bipolartransistoren, IGBTs sind.

4. Gleichrichter, den Leistungswandler (501) nach einem der Ansprüche 1-3 und eine Steuerschaltung (502) umfassend, wobei die Steuerschaltung (502) zum Steuern des Betriebs des Leistungswandlers (501) ausgelegt ist.

5. Leistungssystem, den Leistungswandler (601) nach einem der Ansprüche 1-3 und eine Steuerschaltung (602) umfassend, wobei die Steuerschaltung (602) zum Steuern des Betriebs des Leistungswandlers (601) ausgelegt ist.

6. Verfahren zum verschachtelten Steuern von "Power-Factor-Correction"-Schaltungen, PFC-Schaltungen, die auf den Leistungswandler nach einem der Ansprüche 1-3 angewendet werden, wobei der Leistungswandler mindestens zwei zweite Brückenzweigeinheiten umfasst und das Verfahren umfasst:
verschachteltes Einschalten von Schaltern in den mindestens zwei zweiten Brückenzweigeinheiten, so dass die mindestens zwei zweiten Brückenzweigeinheiten bei beliebiger Phasendifferenz auf verschachtelte parallele Weise arbeiten.

7. Verfahren nach Anspruch 6, wobei der Prozess des verschachtelten Einschaltens von Schaltern in den mindestens zwei zweiten Brückenzweigeinheiten umfasst:
verschachteltes Einschalten der Schalter in den mindestens zwei zweiten Brückenzweigeinheiten in Abhängigkeit davon, ob der Leistungswandler in einer positiven Halbwelle oder einer negativen Halbwelle arbeitet, oder gemäß einem Tastverhältnis.

8. Verfahren nach Anspruch 6 oder 7, wobei:
wenn ein Schalter in der zweiten Brückenzweigeinheit eingeschaltet wird, der andere Schalter in der zweiten Brückenzweigeinheit als ein Spulenstromfreilaufstromschalter dient.

9. Verfahren nach Anspruch 6 oder 7, wobei
der Leistungswandler in einem nichtkontinuierlichen Strommodus (Discontinuous Current Mode, DCM) mit fester Schaltfrequenz oder in einem kontinuierlichen Strommodus (Continuous Current Mode, CCM) mit fester Frequenz oder in einem kontinuierlichen Grenzmodus (Boundary Continuous Mode, BCM) mit variabler Frequenz arbeitet.

10. Computerprogrammprodukt, **dadurch gekennzeichnet, dass** es einen Programmcode umfasst, der, wenn er durch eine Computereinheit ausgeführt wird, veranlassen wird, dass die Computereinheit das Verfahren nach einem der Ansprüche 6 bis 9 ausführt.

## Revendications

1. Convertisseur de puissance, comprenant une première unité formant branche de pont (201), une deuxième unité formant branche de pont (202), une troisième unité formant branche de pont (203) et un condensateur (204), dans lequel :
une partie supérieure de la première unité formant branche de pont (201) et une partie supérieure de la deuxième unité formant branche de pont (202) sont reliées à une première extrémité du condensateur (204), et une partie inférieure de la première unité formant branche de pont (201) et une partie inférieure de la deuxième unité formant branche de pont (202) sont reliées à une deuxième extrémité du condensateur (204) ;
la première unité formant branche de pont (201) comprend deux diodes (D2, D4) ou commutateurs montés en série dans un même sens, et une jonction des deux diodes (D2, D4) ou commutateurs est reliée à une première extrémité d'une alimentation (205) ;
la deuxième unité formant branche de pont (202) comprend deux commutateurs (S1, S3) et une inductance (L1) ; les deux commutateurs (S1, S3) dans la deuxième unité formant branche de pont (202) sont montés en série dans un même sens, et une première extrémité de l'inductance (L1) est reliée à une jonction des deux commutateurs (S1, S3) dans la deuxième unité formant branche de pont (202), et une deuxième extrémité de l'inductance (L1) est reliée à une deuxième extrémité de l'alimentation (205) ;
**caractérisé en ce qu'**une partie supérieure de la troisième unité formant branche de pont (203) est reliée à la première extrémité du condensateur (204), et une partie inférieure de la troisième unité formant branche de pont (203) est reliée à la deuxième extrémité du condensateur (204) ; et
la troisième unité formant branche de pont (203) comprend deux diodes (D1, D3) montées en série dans un même sens, et une jonction des deux diodes (D1, D3) dans la troisième unité formant branche de pont (203) est reliée à la deuxième extrémité de l'alimentation (205).

2. Convertisseur de puissance selon la revendication 1, lequel convertisseur de puissance comprend : au moins deux deuxièmes unités formant branche de pont (302, 303), lesquelles au moins deux deuxièmes unités formant branche de pont (302, 303) sont montées en parallèle.

3. Convertisseur de puissance selon la revendication 1, dans lequel : les commutateurs (S1, S3) dans la deuxième unité formant branche de pont (302) sont des transistors à effet de champ métal-oxyde-semiconducteur, dits MOSFET, ou des transistors bipolaires à grille isolée, dits IGBT.

4. Redresseur, comprenant le convertisseur de puissance (501) selon l'une quelconque des revendications 1 à 3, et un circuit de commande (502), lequel circuit de commande (502) est configuré pour commander le fonctionnement du convertisseur de puissance (501).

5. Système de puissance, comprenant le convertisseur de puissance (601) selon l'une quelconque des revendications 1 à 3 et un circuit de commande (602), lequel circuit de commande (602) est configuré pour commander le fonctionnement du convertisseur de puissance (601).

6. Procédé d'entrelacement de la commande de circuits de correction du facteur de puissance, dite PFC, appliqué au convertisseur de puissance selon l'une quelconque des revendications 1 à 3, lequel convertisseur de puissance comprend au moins deux deuxièmes unités formant branche de pont, et lequel procédé comprend l'étape consistant à :
entrelacer le déblocage de commutateurs dans lesdites au moins deux deuxièmes unités formant branche de pont de manière à assurer le fonctionnement en parallèle entrelacé desdites au moins deux deuxièmes unités formant branche de pont à une différence de phase quelconque.

7. Procédé selon la revendication 6, dans lequel l'étape consistant à entrelacer le déblocage des commutateurs dans lesdites au moins deux deuxièmes unités formant branche de pont comprend l'étape consistant à :
entrelacer le déblocage des commutateurs dans lesdites au moins deux deuxièmes unités formant branche de pont selon que le convertisseur de puissance fonctionne dans une alternance positive ou dans une alternance négative, ou suivant un rapport cyclique.

8. Procédé selon la revendication 6 ou 7, dans lequel :
lorsqu'un commutateur dans la deuxième unité formant branche de pont est débloqué, l'autre commutateur dans la deuxième unité formant branche de pont joue le rôle de commutateur en roue d'inertie de courant d'inductance.

9. Procédé selon la revendication 6 ou 7, dans lequel :
le convertisseur de puissance fonctionne dans un mode de courant discontinu, dit DCM, à fréquence de commutation fixe ou fonctionne dans un mode de courant continu, dit CCM, à fréquence fixe ou fonctionne dans un mode continu aux limites, dit BCM, à fréquence variable.

10. Produit programme d'ordinateur, **caractérisé en ce qu'**il comprend un code de programme d'ordinateur dont l'exécution par une unité ordinateur amène celle-ci à accomplir le procédé selon l'une quelconque des revendications 6 à 9.
